# EUROPÄISCHE PATENTSCHRIFT

(11) **EP 4 073 602 B1**
(45) Veröffentlichungstag und Bekanntmachung des Hinweises auf die Patenterteilung: **27.09.2023**
(21) Anmeldenummer: 21701910.8
(22) Anmeldetag: 13.01.2021
(51) Int. Cl.: G05B 19/042, G05B 19/418, H04L 9/32, H04L 9/40

(54) **LEITSYSTEM FÜR TECHNISCHE ANLAGEN MIT ZERTIFIKATSMANAGEMENT**
CONTROL SYSTEM FOR TECHNICAL INSTALLATIONS WITH CERTIFICATE MANAGEMENT
SYSTÈME DE GUIDAGE POUR INSTALLATIONS TECHNIQUE POURVU DE GESTION DE CERTIFICATS

(30) Priorität: 14.01.2020 EP 20151788
(43) Veröffentlichungstag der Anmeldung: 19.10.2022
(73) Patentinhaber: Siemens Aktiengesellschaft, 80333 München (DE)
(72) Erfinder: LUTZ, Benjamin, 76327 Pfinztal (DE); PALMIN, Anna, 76187 Karlsruhe (DE)
(74) Vertreter: Siemens Patent Attorneys
(86) Internationale Anmeldenummer: PCT/EP2021/050560
(87) Internationale Veröffentlichungsnummer: WO 2021/144296

(56) Entgegenhaltungen:
- EP-A1- 2 942 900
- EP-A1- 3 562 089
- EP-A2- 2 549 710
- US-A1- 2007 168 658

## Beschreibung

Die Erfindung betrifft ein Leitsystem für eine technische Anlage, insbesondere eine Fertigungs- oder Prozessanlage, das dazu ausgebildet und vorgesehen ist, im Rahmen eines Zertifikatsmanagements eine Vergabe und eine Revokation von Zertifikaten für Komponenten der technischen Anlage zu initiieren, mit den Merkmalen des Anspruchs 1. Außerdem betrifft die Erfindung ein Verfahren gemäß Anspruch 4.

Im Rahmen eines Zertifikatsmanagements einer industriellen Anlage müssen Zertifikate nicht nur ausgestellt, sondern auch revoziert werden können. Die Revokation der von einer Anlagenkomponenten verwendeten Zertifikate erfolgt insbesondere bei der Außerbetriebnahme der Anlagenkomponenten und bei deren Austausch (bzw. Ersatz durch eine andere Komponente) und kann zur Laufzeit der Anlage erfolgen. Die verwendeten Zertifikate werden dabei durch die Revokation ungültig gemacht. Ansonsten könnten sie ggf. missbraucht werden, indem z.B. ein abgeschriebenes und ausgebautes Gerät unter Verwendung dieser Zertifikate (ggf. in einem anderen Anlagenteil) zur Kommunikation eingesetzt wird.

Auch im Kontext einer modularen Automatisierung ist die Möglichkeit, die Revokation bestimmter Zertifikate bei Bedarf anstoßen zu können, unabdingbar. Dies liegt daran, dass ein Modul sich in verschiedenen Projekten mit verschiedenen anderen Modulen kombinieren lässt und bekommt dabei in der Regel projektspezifische Zertifikate zugewiesen, die es für die Kommunikation mit anderen Modulen im jeweiligen Projektkontext benötigt. Sobald der Einsatz eines Moduls in einem bestimmten Projektkontext nicht mehr erforderlich ist (und somit zu unterbinden ist), sollen alle dem Modul in diesem Projektkontext zugewiesenen, projektspezifischen Zertifikate revoziert werden, um einen Missbrauch der Zertifikate auszuschließen.

Bei der Revokation der Zertifikate, die - je nach Szenario - durch eine Anlagenkomponente selbst oder durch eine berechtigte (administrative) Instanz angestoßen werden kann, wird ein Revokationsantrag (engl. Revokation Request) an eine Zertifizierungsstelle (engl. Certification Authority oder kurz: CA), die dieses Zertifikat ausgestellt hat, abgesetzt. Derartige Revokationsanträge sind ein Bestandteil von bekannten Zertifikatsmanagementprotokollen, wie z.B. CMP nach RFC 4210, und werden von den Zertifizierungsstellen, z.B. von der sog. EJBCA/PrimeKey CA, unterstützt. Für andere Zertifizierungsstellen, die Protokolle unterstützen, die keine Revokationsanträge als einen Nachrichtentyp in ihrem Umfang haben, kann die Revokation
- entweder manuell, direkt an der Zertifizierungsstelle (z.B. über deren Web-Frontend),
- oder applikativ (z.B. angestoßen durch eine Registrierungsstelle (engl. Registration Authority oder kurz: RA) realisiert werden.

Erweist sich eine Kommunikationsbeziehung zwischen einzelnen Komponenten der Anlage plötzlich als nicht mehr notwendig und soll sie aus Security-Sicht durch die Revokation der verwendeten Zertifikate unterbunden werden, ist eine Revokation der Zertifikate "mit sofortiger Wirkung" bei bislang bekannten Leitsystemen nicht möglich. Ein Revokationsvorgang wird bislang durch einen Benutzer direkt an der Zertifizierungsstelle oder über eine andere zentrale Instanz, z.B. einem Registrierungsdient, angestoßen. Dabei wird zunächst die Notwendigkeit der Revokation eines Zertifikats erkannt und dann die Revokation manuell angestoßen. Dabei können aus organisatorischen und technischen Gründen bedeutende Verzögerungen zwischen diesen beiden Ereignissen resultieren.

EP 2 942 900 A1 offenbart ein Leitsystem für eine technische Anlage (z.B. Fertigungs- oder Prozessanlage), wobei eine Revokation von Zertifikaten für Komponenten der technischen Anlage bei Auswechselung einer Komponente stattfindet.

Der Erfindung liegt die Aufgabe zugrunde, ein Leitsystem einer technischen Anlage anzugeben, das ein Zertifikatsmanagement mit einer effizienteren Revokation von Zertifikaten ermöglicht.

Diese Aufgabe wird gelöst durch ein Leitsystem für eine technische Anlage mit den Merkmalen des Anspruchs 1. Außerdem wird die Aufgabe gelöst durch ein Verfahren gemäß Anspruch 4.

Vorteilhafte Weiterbildungen ergeben sich aus den abhängigen Ansprüchen.

Bei einem Leitsystem eingangs beschriebener Art wird die Aufgabe erfindungsgemäß dadurch gelöst, dass das Leitsystem einen computerimplementierten Revokationsdienst umfasst, der dazu ausgebildet und vorgesehen ist, die Revokation von Zertifikaten ereignisgesteuert und automatisiert zu initiieren.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei einer Komponente kann es sich um einzelne Sensoren oder Aktoren der technischen Anlage handeln. Eine Komponente kann aber auch ein Zusammenschluss mehrerer Sensoren und/oder Aktoren sein, beispielsweise ein Motor, ein Reaktor, eine Pumpe oder ein Ventilsystem.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Dadurch, dass die Revokation ereignisgesteuert und vollautomatisiert vom Prozessleitsystem aus angestoßen wird, können die zu revozierenden Zertifikate mit möglichst sofortiger Wirkung revoziert werden. Durch die erfindungsgemäßen technischen Merkmale können Verzögerungen im Revokationsvorgang effizient minimiert werden, was das Zertifikatsmanagement des Leitsystems der technischen Anlage insgesamt verbessert.

Als Ereignis kommen beliebige Zustandsänderungen innerhalb der technischen Anlage in Frage. Im Rahmen einer vorteilhaften Weiterbildung der Erfindung stellt eine Änderung von Kommunikationsbeziehungen zwischen einzelnen Komponenten der technischen Anlage ein solches Ereignis dar.

Vorteilhafterweise ist der Revokationsdienst des Leitsystems dazu ausgebildet und vorgesehen, die Revokation von Zertifikaten dadurch zu initiieren, dass der Revokationsdienst einen Revokationsantrag an eine Zertifizierungsstelle stellt. Dabei ist der Revokationsdienst dazu ausgebildet und vorgesehen, die Bearbeitung des Revokationsantrags zu überwachen oder überwachen zu lassen. Dies bedeutet, dass der Revokationsdienst entweder selbst, d.h. unmittelbar, überwacht oder mittels eines separaten Dienstes, d.h. mittelbar, insbesondere mittels eines Registrierungsdienstes, überwachen lässt.

Die Zertifizierungsstelle wird auch als eine sogenannte "Issuing CA (Certification Authority)" bezeichnet. Eine derartige "Issuing CA" ist in der Regel stets online und stellt, basierend auf eingehenden Zertifikatsanträgen, Zertifikate für diverse Antragsteller aus, die sie mit ihrem eigenen "Issuing CA" Zertifikat signiert. Die Vertrauenswürdigkeit der "Issuing CA" wird dadurch sichergestellt, dass ihr eigenes "Issuing CA" Zertifikat durch das Zertifikat einer vertrauenswürdigen Wurzelzertifizierungsstelle (auch als "Root CA" bezeichnet), die sich in einer abgesicherten Umgebung befindet, signiert ist. Hierbei ist zu beachten, dass die "Root CA" die meiste Zeit offline ist und nur dann - unter der Einhaltung strengster Sicherheitsvorkehrungen - aktiviert bzw. eingeschaltet wird, wenn sie ein Zertifikat für eine zugehörige "Issuing CA" ausstellen soll. Die "Root CA" kann sich außerhalb der technischen Anlage befinden.

Im Rahmen der Überwachung des Revokationsantrags durch den Revokationsdienst kann dieser im Falle einer verzögerten Bearbeitung des Revokationsantrags eine erneute Anfrage an die Zertifizierungsstelle richten (man spricht in diesem Zusammenhang vom sogenannten "Polling"). Dieser Vorgang wird beispielsweise im Standard RFC 4210 beschrieben (RFC = Request for Comments), in welchem das Certificate Management Protocol (CMP) spezifiziert ist.

Bei einer besonders bevorzugten Weiterbildung der Erfindung ist das Leitsystem dazu ausgebildet und vorgesehen, nach einer erfolgten Revokation von Zertifikaten die Revokation innerhalb des Leitsystems bekannt zu machen, wobei die Bekanntmachung insbesondere in Form einer Sperrliste erfolgt. Durch die zuvor bereits erläuterte sofortige Revokation von Zertifikaten und die sich direkt daran anschließende Verbreitung der Nachricht bezüglich der Revokation innerhalb des Leitsystems sind alle Komponenten der technischen Anlage stets auf dem aktuellen Stand bezüglich der vergebenen Zertifikate, was die Gefahr eines Missbrauchs von Zertifikaten deutlich verringert. Durch die Bekanntmachung sind alle revozierten Zertifikate im Anlagenkontext stets verfügbar.

Im Falle der Verwendung von Sperrlisten kann die Bekanntmachung der revozierten Zertifikate durch die Zertifizierungsstelle erfolgen. Ein solcher Eintrag in die Sperrliste kann durch die Zertifizierungsstelle digital signiert werden, um die Authentizität der Eintragung zu garantieren. Dies verhindert unter anderem, dass die Sperrliste von einem Benutzer (z.B. Projekteur) oder einem intelligenten Dienst selbst aktualisiert werden können, was die Gefahr eines Missbrauchs verringert.

Mittels der anlagenweit verfügbaren Sperrliste kann ad-hoc ausgesteuert werden, welche von einer projektspezifischen Zertifizierungsstelle ausgestellten Zertifikate projektspezifisch zulässig sind und welche nicht. Erweist sich ein Zertifikat als im Kontext eines (Engineering-)Projektes unzulässig, so kann ein Revokationsvorgang wie zuvor beschrieben angestoßen werden.

Die zuvor formulierte Aufgabe wird zudem durch ein Verfahren gemäß Anspruch 4 gelöst.

Bezüglich der Erläuterungen zu dem Verfahrensanspruch und die damit verbundenen Vorteile sei auf die obenstehenden Ausführungen zu dem erfindungsgemäßen Leitsystem verwiesen.

Im Rahmen einer vorteilhaften Weiterbildung des erfindungsgemäßen Verfahrens stellt eine Änderung von Kommunikationsbeziehungen zwischen Komponenten der technischen Anlage ein Ereignis dar, das die automatisierte Initiierung der Revokation des Zertifikats triggert.

Bevorzugt stellt der Revokationsdienst zur Initiierung der Revokation von Zertifikaten einen Revokationsantrag an eine Zertifizierungsstelle, wobei der Revokationsdienst die Bearbeitung des Revokationsantrags überwacht.

Besonders bevorzugt wird nach einer erfolgten Revokation von Zertifikaten die Revokation innerhalb des Leitsystems bekannt gemacht, wobei die Bekanntmachung insbesondere in Form einer Sperrliste erfolgt.

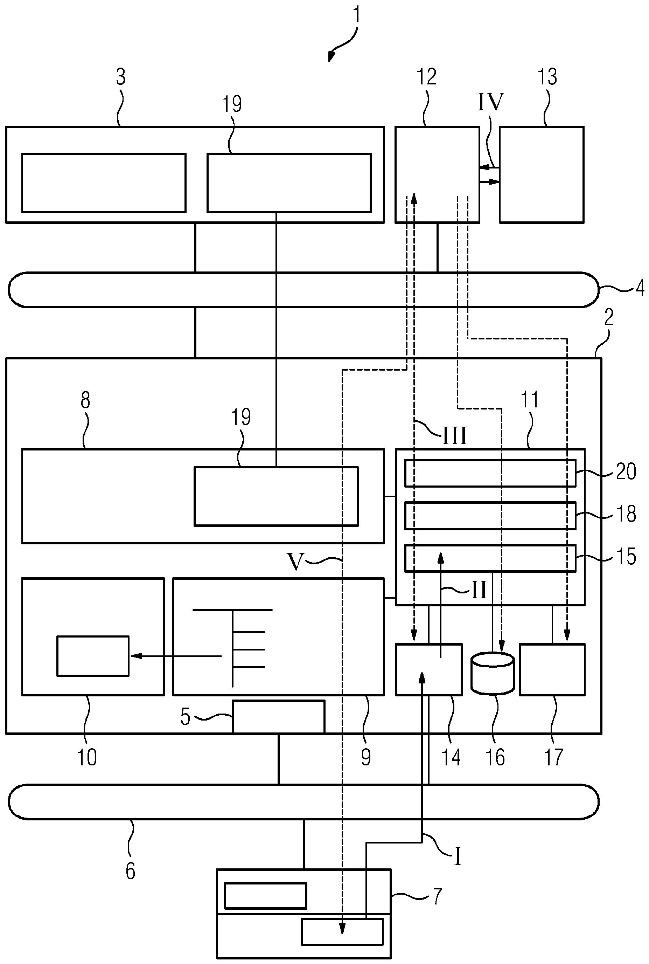

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnischen Anlage ausgebildeten technischen Anlage dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Servers 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Hierüber kann der Operator Station Server 2 mit einem (externen) Gerät 7 kommunizieren. Bei dem angeschlossenen Gerät 7 kann es sich dabei alternativ auch um eine Applikation, insbesondere Webapplikation, handeln. Im Rahmen der Erfindung kann eine beliebige Zahl an Geräten und/oder Applikationen 7 an den Operator Station Server 2 angeschlossen sein. Der Anlagenbus 6 kann, ohne sich darauf zu beschränken, beispielsweise als Industrial Ethernet ausgebildet sein. Das Gerät 7 kann wiederum mit einer beliebigen Anzahl an Subsystemen (nicht dargestellt) verbunden sein.

In dem Operator Station Server 2 ist ein Visualisierungsdienst 8 integriert, über den eine Übertragung von (Visualisierungs-)Daten an den Operator Station Client 3 erfolgen kann. Zudem weist der Operator Station Server 2 ein Prozessabbild (Process Image) 9, ein Prozessdatenarchiv 10 und einen sogenannten "User Profile and Selection Service (UPSS)" 11 auf. In dem Prozessabbild 9 des Operator Station Servers 2 ist eine Momentaufnahme der (Signal-)Zustände der mit dem Operator Station Server 2 über die Geräteschnittstelle 5 verbundenen Geräte und/oder Applikationen 7 hinterlegt. Bereits vergangene (Signal-)Zustände sind zwecks Archivierung in dem Prozessdatenarchiv 10 hinterlegt. Der "User Profile and Selection Service" 11 stellt eine Datenbank dar, in welcher Anwenderprofile und persönliche Einstellungen von Operatoren/Bedienern der verfahrenstechnischen Anlage hinterlegt sind. Diese können auch für weitere Operatoren/Bediener zugänglich sein.

Das Leitsystem 1 umfasst zudem eine Registrierungsstelle 12 und eine Zertifizierungsstelle 13. Diese sind mittels des Terminalbus 4 mit dem Operator Station Server 2 und dem Operator Station Client 3 verbunden. Die Registrierungsstelle 12 ist zur Entgegennahme und Weiterleitung von Zertifizierungsanträgen an die Zertifizierungsstelle 13 ausgebildet. Die Zertifizierungsstelle 13 dient der Ausstellung von Zertifikaten.

Will sich ein Gerät 7 im Kontext eines bestimmten Engineering-Projektes beim Leitsystem 1 anmelden und dessen Funktionalitäten nutzen, benötigt es ein gültiges Zertifikat. In einem ersten Schritt I wendet sich das Gerät 7 an einen Zertifizierungsdienst 14 des Operator Station Servers 2. In einem zweiten Schritt II greift der Zertifizierungsservice 14 auf eine in dem User Profile and Selection Service 11 hinterlegte Sperrliste 15 zu. In dieser Sperrliste 15 bzw. in einer Datenbank 16 des User Profile and Selection Service 11 sind zum Zeitpunkt des Zugriffs auf die Sperrliste 15 im Kontext der verfahrenstechnischen Anlage revozierte Zertifikate hinterlegt ("Certificate Revocation List").

Steht dem Gerät 7 im Kontext des Engineering-Projektes das zu beantragende Zertifikat zu, d.h. insbesondere ist das Zertifikat nicht als revoziertes Zertifikat in der Sperrliste 15 aufgeführt, wird der entsprechende Zertifikatsantrag in einem dritten Schritt III an die Registrierungsstelle 12 weitergeleitet, die wiederum den Zertifikatsantrag in einem vierten Schritt IV an die Zertifizierungsstelle 13 weiterleitet. Das von der Zertifizierungsstelle 13 ausgestellte Zertifikat wird anschließend mittels der Registrierungsstelle 12 an das beantragende Gerät 7 übertragen (Schritt V).

Tritt nun ein bestimmtes Ereignis ein - beispielsweise eine Veränderung von Kommunikationsbeziehungen innerhalb der verfahrenstechnischen Anlage -, kann ein bestimmtes Zertifikat ungültig werden und muss daher revoziert werden. Ausgehend von einem Revokationsservice 17 des Operator Station Servers 2 wird ein Revokationsantrag an die Registrierungsstelle 12 übermittelt. Der Revokationsantrag wird dabei vollautomatisiert ohne direkte Einwirkung eines Projekteurs oder Operators der verfahrenstechnischen Anlage angestoßen. Die Zertifizierungsstelle 13 erklärt das betreffende Zertifikat anschließend für ungültig und hinterlegt diese Information auf einer in der Zertifizierungsstelle 13 hinterlegten Sperrliste 15. Die aktualisierte Sperrliste 15 wird darauffolgend mittels der Registrierungsstelle 12 an die Datenbank 16 des User Profile and Selection Service 11 übertragen.

Das ereignisgesteuerte Abholen der Sperrliste 15 durch die Registrierungsstelle 12 von der Zertifizierungsstelle 13 kann dabei auf verschiedenen Wegen realisiert werden. Im einfachsten Fall kann in der Zertifizierungsstelle 13 ein Trigger konfiguriert werden, der bewirkt, dass die in der Zertifizierungsstelle 13 lokal hinterlegte Sperrliste 15 nach der Revokation eines Zertifikats sofort durch eine aktualisierte Sperrliste 15 ersetzt wird. Der Ablageort der Sperrliste 15 in der Zertifizierungsstelle 13 kann von der Registrierungsstelle 12 aus (z.B. durch einen entsprechenden intelligenten Dienst) überwacht werden, damit jede Aktualisierung sofort erkannt und die aktualisierte Sperrliste 15 sofort an den User Profile and Selection Service 11 des Operator Station Servers 2 übermittelt werden kann. Zur Erhöhung der Verfügbarkeit der Sperrliste 15 bei der Verwendung von mehreren Operator Station Servern 2, kann die Datenbank 16 mittels eines Dienstes "Mirroring" 18 zwischen den einzelnen Operator Station Servern 2 abgeglichen werden.

Über eine von dem Visualisierungsdienst 8 grafisch auf dem Operator Station Client 3 abgebildete Schnittstelle 19 kann ein Operator/Projekteur neue/überarbeitete Ereignisse vorgeben, die mittels eines Manage-Dienstes 20 des User Profile and Selection Services 11 dem Revokationsdienst 17 für zukünftige automatisierte Revokationen von Zertifikaten bereitgestellt werden.

Durch die zuvor beschriebenen technischen Merkmale können Verzögerungen im Revokationsvorgang eliminiert werden. Zudem erhält jedes Gerät 7 - im Einklang mit dem Minimalitätsprinzip, welches im Kontext der Industrial Security eine sehr hohe Priorität hat - ausschließlich den Zugriff auf die aktuellen Sperrlisten 15 erteilt, die sie wirklich benötigt. Die hierzu notwendigen technischen Funktionen sind "verfahrenstechnisch" in dem Leitsystem 1 integriert, so dass neben den im Umfang des Leitsystems 1 bereits vorhandenen Kommunikationswege keine weiteren Kommunikationswege "außerhalb des Leitsystems 1" für das Revokationsmanagement benötigt werden.

Ein weiterer Vorteil besteht im Hinblick auf Security darin, dass im Netzwerk keine speziellen Einstellungen wegen des erforderlichen Zugriffs auf die Sperrlisten 15 vorgenommen werden müssen (z.B. keine Ports geöffnet werden müssen, was ein hohes Security-Risiko in sich birgt). Das beschriebene Leitsystem 1 eignet sich in hohem Maße für modularisierte Anlagen, bei denen dynamisch verfahrenstechnische Anlagenteile hinzugenommen oder herausgenommen werden.

## Patentansprüche

1. Leitsystem (1) für eine technische Anlage, insbesondere eine Fertigungs- oder Prozessanlage, das dazu ausgebildet und vorgesehen ist, im Rahmen eines Zertifikatsmanagements eine Vergabe und eine Revokation von Zertifikaten für Komponenten (7) der technischen Anlage zu initiieren,
**dadurch gekennzeichnet, dass**
das Leitsystem (1) einen computerimplementierten Revokationsdienst (17) umfasst, der dazu ausgebildet und vorgesehen ist, die Revokation von Zertifikaten ereignisgesteuert und automatisiert zu initiieren, wobei eine Änderung von Kommunikationsbeziehungen zwischen Komponenten (7) der technischen Anlage, ohne dass dabei eine Komponente (7) ausgewechselt oder entfernt wird, ein Ereignis darstellt, das die Initiierung der Revokation von Zertifikaten triggert.

2. Leitsystem (1) nach Anspruch 1, bei dem der Revokationsdienst (17) dazu ausgebildet und vorgesehen ist, die Revokation von Zertifikaten dadurch zu initiieren, dass der Revokationsdienst (17) einen Revokationsantrag an eine Zertifizierungsstelle (13) stellt, wobei der Revokationsdienst (17) dazu ausgebildet und vorgesehen ist, die Bearbeitung des Revokationsantrags zu überwachen oder überwachen zu lassen.

3. Leitsystem (1) nach einem der vorangegangenen Ansprüche, das dazu ausgebildet und vorgesehen ist, nach einer erfolgten Revokation von Zertifikaten die Revokation innerhalb des Leitsystems (1) bekannt zu machen, wobei die Bekanntmachung insbesondere in Form einer Sperrliste (15) erfolgt.

4. Verfahren, umfassend:
a) Initiierung einer Vergabe eines Zertifikats an eine Komponente einer technischen Anlage durch ein Leitsystem (1) der technischen Anlage;
b) In Reaktion auf ein bestimmtes Ereignis, automatisierte Initiierung einer Revokation des Zertifikats durch einen computerimplementierten Revokationsdienst (17) des Leitsystems (1) der technischen Anlage, wobei eine Änderung von Kommunikationsbeziehungen zwischen Komponenten (7) der technischen Anlage, ohne dass dabei eine Komponente (7) ausgewechselt oder entfernt wird, ein Ereignis darstellt, das die automatisierte Initiierung der Revokation des Zertifikats triggert.

5. Verfahren nach Anspruch 4, bei dem der Revokationsdienst (17) zur Initiierung der Revokation von Zertifikaten einen Revokationsantrag an eine Zertifizierungsstelle (13) stellt, wobei der Revokationsdienst (17) die Bearbeitung des Revokationsantrags überwacht oder überwachen lässt.

6. Verfahren nach einem der Ansprüche 4 oder 5, bei dem nach einer erfolgten Revokation von Zertifikaten die Revokation innerhalb des Leitsystems (1) bekannt gemacht wird, wobei die Bekanntmachung insbesondere in Form einer Sperrliste (15) erfolgt.

## Claims

1. Control system (1) for a technical installation, in particular a manufacturing or process installation, which is embodied and provided to initiate an issuing and a revocation of certificates for components (7) of the technical installation within the scope of a certificate management,
**characterised in that**
the control system (1) comprises a computer-implemented revocation service (17), which is embodied and provided to initiate the revocation of certificates in an event-controlled and automated manner, wherein a change in communication links between components (7) of the technical installation, without a component (7) being replaced or removed in the process, represents an event which triggers the initiation of the revocation of certificates.

2. Control system (1) according to claim 1, in which the revocation service (17) is embodied and provided to initiate the revocation of certificates in that the revocation service (17) provides a revocation request to a certification authority (13), wherein the revocation service (17) is embodied and provided to monitor, or allow monitoring of, the processing of the revocation request.

3. Control system (1) according to one of the preceding claims, which is embodied and provided to announce the revocation within the control system (1) after revocation of certificates, wherein the announcement takes place in particular in the form of a blocklist (15).

4. Method, comprising:
a) initiating an issuing of a certificate to a component of a technical installation by means of a control system (1) of the technical installation;
b) in response to a specific event, automatically initiating a revocation of the certificate by means of a computer-implemented revocation service (17) of the control system (1) of the technical installation, wherein a change in communication links between components (7) of the technical installation, without a component (7) being replaced or removed in the process, represents an event which triggers the automated initiation of the revocation of the certificate.

5. Method according to claim 4, in which the revocation service (17) provides a revocation request to a certification authority (13) for initiating the revocation of certificates, wherein the revocation service (17) monitors, or allows monitoring of, the processing of the revocation request.

6. Method according to one of claims 4 or 5, in which after a revocation of certificates, the revocation is announced within the control system (1), wherein the announcement takes place in particular in the form of a blocklist (15).

## Revendications

1. Système (1) de conduite d'une installation technique, en particulier d'une installation de fabrication ou de processus, qui est constitué et prévu pour lancer, dans le cadre d'une gestion de certificat une attribution et une révocation de certificats à des composants (7) de l'installation technique,
**caractérisé en ce que**
le système (1) de conduite comprend un service (17) de révocation, qui est mis en oeuvre par ordinateur et qui est constitué et prévu pour lancer de manière automatisée et commandée à l'évènement la révocation de certificats, dans lequel une modification des relations de communication entre des composants (7) de l'installation technique, sans que pour autant un composant (7) soit remplacé ou retiré, représente un événement qui déclenche le lancement de la révocation de certificats.

2. Système (1) de conduite suivant la revendication 1, dans lequel le service (17) de révocation est constitué et prévu pour lancer la révocation de certificats par le fait que le service (17) de révocation fait une demande de révocation à un poste (13) de certification, le service (17) de révocation étant constitué et prévu pour contrôler ou faire contrôler le traitement de la demande de révocation.

3. Système (1) de conduite suivant l'une des revendications précédentes, qui est constitué et prévu pour, après qu'une révocation de certificat a été effectuée, faire connaître la révocation au sein du système (1) de conduite, cette mise en connaissance s'effectuant en particulier sous la forme d'une liste (15) d'interdiction.

4. Procédé comprenant :
a) le lancement d'une attribution d'un certificat à un composant d'une installation technique par un système (1) de conduite de l'installation technique ;
b) en réaction à un événement déterminé, le lancement automatisé d'une révocation du certificat par un service (17) de révocation automatisé mis en oeuvre par ordinateur du système (1) de conduite de l'installation technique, dans lequel une modification des relations de communication entre des composants (7) de l'installation technique, sans que pour autant un composant (7) soit remplacé ou retiré, représente un événement qui déclenche le lancement automatisé de la révocation du certificat.

5. Procédé suivant la revendication 4, dans lequel le service (17) de révocation fait, pour le lancement de la révocation de certificats, une demande de révocation à un poste (13) de certification, le service (17) de révocation contrôlant ou faisant contrôler le traitement de la demande de révocation.

6. Procédé suivant l'une des revendications 4 ou 5, dans lequel, après qu'une révocation de certificats a été effectuée, on fait connaître la révocation dans le système (1) de conduite, la mise en connaissance d'effectuant en particulier sous la forme d'une liste (15) d'interdiction.
